# EUROPEAN PATENT APPLICATION

(11) **EP 3 290 691 A1**
(43) Date of publication of application: **07.03.2018**
(21) Application number: 16275142.4
(22) Date of filing: 29.09.2016
(51) Int. Cl.: F03D 13/20, F03D 80/00, E04H 12/08

(54) **TOWER STRUCTURE AND WIND TURBINE TOWER**

(30) Priority: 30.08.2016 KR 20160110959
(71) Applicant: Posco, Pohang-si, Gyeongsangbuk-do 37859 (KR)
(72) Inventor: LEE,, Dae Yong, 21985 Incheon (KR)
(74) Representative: Potter Clarkson LLP

(57) **Abstract**

A tower structure includes a plurality of tower modules; and a connecting channel portion connecting the plurality of tower modules to each other such that the plurality of tower modules are stacked. Each of the plurality of tower modules includes a module body portion being hollow and including a metal; and a flange portion disposed on an end of the module body portion in a height direction of the module body portion, and having an installation groove recessed in a circumferential direction of the flange portion. The connecting channel portion connects the plurality of tower modules to each other by being inserted into the installation groove such that the plurality of tower modules are stacked.

## Description

### CROSS-REFERENCE TO RELATED APPLICATIONS

This application claims the benefits of priorities to Korean Patent Application No. 10-2016-0110959, filed on August 30, 2016 with the Korean Intellectual Property Office, the entireties of which are incorporated herein by reference.

### BACKGROUND

The present disclosure relates to a tower structure segmented in a length direction thereof and a wind turbine tower.

What is described herein simply provides background information on the present disclosure, and does not constitute prior art.

Conventional wind turbine tower structures have often been installed by assembling a plurality of steel shells in a height direction thereof. Here, a pair of flanges installed on ends of the respective steel shells for a connection between the steel shells can be brought into contact with and then fastened to the flanges of other steel shells using high-tensile bolts.

However, in the case of adopting such a connecting structure, it is difficult to apply a pre-load to each high-tensile bolt evenly and maintain the pre-load, and the untightening of nuts may occur during common use of wind power generators. More seriously, a tensile load is allowed to repeatedly act on the threads of high-tensile bolts so that the high-tensile bolts may be destroyed by fatigue after a certain amount of fatigue load is accumulated, posing a serious threat to the safety of wind turbine tower structures.

As wind power generators have become larger, the size of wind turbine tower structures is also increasing. Accordingly, high-tensile bolts required to connect steel shells for large wind turbine towers to each other have been increased in size, proportionately to that of large wind turbine tower structures.

When the size of high-tensile bolts is increased, quality management in a manufacturing process thereof, such as rolling rods for bolts or machining bolt heads or bolt threads may be difficult. Thus, fatigue failure of high-tensile bolts may be more serious.

### SUMMARY

An aspect of the present disclosure may provide a tower structure, in which tower modules segmented in a length direction of the tower structure may be connected to each other in a simple manner.

According to an aspect of the present disclosure, a tower structure may include: a plurality of tower modules; and a connecting channel portion connecting the plurality of tower modules to each other such that the plurality of tower modules are stacked, in which each of the plurality of tower modules may include: a module body portion being hollow and including a metal; and a flange portion disposed on an end of the module body portion in a height direction of the module body portion, and having an installation groove recessed in a circumferential direction of the flange portion, and the connecting channel portion may connect the plurality of tower modules to each other by being inserted into the installation groove such that the plurality of tower modules may be stacked.

The tower structure may further include a fastening member fastening the connecting channel portion to the flange portion by being fixed to the flange portion through the connecting channel portion.

The module body portion may include: an outer shell forming an outer surface of the module body portion, and including a metal; and a stiffening member disposed on a connecting portion of the outer shell and the flange portion to reinforce the connecting portion.

The connecting channel portion may include: at least an outer channel member of the outer channel member and an inner channel member, in which the outer channel member may be inserted into an outer installation groove recessed from an outer surface of the flange portion, and the inner channel member may be inserted into an inner installation groove recessed from an inner surface of the flange portion.

The connecting channel portion may be disposed in an overall circumferential direction of the plurality of tower modules, and may have at least two segment channels installed in the circumferential direction.

The connecting channel portion may further include: a channel body formed in a height direction of the flange portion across an inner surface or an outer surface of the flange portion connected to the connecting channel portion; and an insertion channel bent from an end of the channel body in a direction of the flange portion.

The insertion channel may have a tapering portion or a step portion having a cross section decreasing toward an inside of the installation groove.

The insertion channel may have a tapering portion having a cross section decreasing toward an inside of the installation groove, and extending to the channel body, and the tapering portion may include: an upward tapering surface upwardly inclined from a front end of the insertion channel in a direction of the channel body; and a downward tapering surface downwardly inclined from the front end of the insertion channel in the direction of the channel body.

The flange portion and the connecting channel portion may include metals, respectively, and the connecting channel portion, and the installation groove of the flange portion may have a metal sealing layer disposed therebetween.

The connecting channel portion may further includes: an outer channel member connecting outer surfaces of the adjacent flange portions to each other, and having a U-shaped cross section with a curvature corresponding to curvatures of the outer surfaces of the adjacent flange portions; and an inner channel member connecting inner surfaces of the adjacent flange portions to each other, and having a U-shaped cross section with a curvature corresponding to curvatures of the inner surfaces of the adjacent flange portions.

The connecting channel portion may include: an outer channel member connecting outer surfaces of the adjacent flange portions to each other; and an inner channel member connecting inner surfaces of the adjacent flange portions to each other, and the fastening member may include: an outer bolt member fastened to the outer channel member in a direction of the outer surface of the flange portion; and an inner bolt member fastened to the inner channel member in a direction of the inner surface of the flange portion.

The connecting channel portion may include: an outer channel member connecting outer surfaces of the adjacent flange portions to each other; and an inner channel member connecting inner surfaces of the adjacent flange portions to each other, and the fastening member is provided as a through bolt member fastening the outer channel member to the inner channel member through the flange portion.

The tower module may have at least two segment modules having cross sections segmented in a circumferential direction of the tower module, the at least two segment modules connected to each other in the circumferential direction, and the connecting channel portion may have a plurality of segment channels segmented in the circumferential direction, and is installed across the at least two segment modules connected to each other in the circumferential direction.

The tower module may further include: a protruding ring portion protruding from one of the flange portion formed on an upper end of the tower module disposed on a lower side of the tower structure, and the flange portion formed on a lower end of the tower module disposed on an upper side of the tower structure; and an insertion ring portion recessed from the other, and allowing for insertion of the protruding ring portion.

A wind turbine tower may include: a base having a lower end thereof embedded in the ground, and having an upper end thereof with an installation platform formed thereon; a tower structure having a flange portion fixed to an installation flange of the installation platform by a connecting channel portion; and a wind power generator installed on an upper end of the tower structure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a view of a wind turbine tower according to an embodiment;
FIG. 2 is a partial cross-sectional view of a tower structure according to an embodiment;
FIG. 3A is a partial cross-sectional view of a tower structure according to an embodiment;
FIG. 3B is a partial cross-sectional view of a tower structure according to an embodiment;
FIG. 4 is a detail of the tower structure of FIG. 3A;
FIGS. 5A through 5C are views of connecting channel portions of a tower structure according to an embodiment;
FIG. 6 is a view illustrating a process of connecting a plurality of tower modules in a tower structure, according to an embodiment, to each other such that the tower modules are stacked;
FIG. 7 is a view illustrating a process of connecting a plurality of tower modules in a tower structure, according to an embodiment, to each other such that the tower modules are stacked;
FIGS. 8A and 8B are partial cross-sectional views of tower structures according to an embodiment; and
FIG. 9 is a partial cross-sectional view of a tower structure according to an embodiment.

### DETAILED DESCRIPTION

Hereinafter, embodiments of the present disclosure will be described as follows with reference to the attached drawings.

The present disclosure may, however, be exemplified in many different forms and should not be construed as being limited to the specific embodiments set forth herein. Rather, these embodiments are provided so that this disclosure will be thorough and complete, and will fully convey the scope of the disclosure to those skilled in the art.

Throughout the specification, it will be understood that when an element, such as a layer, region or wafer (substrate), is referred to as being "on," "connected to," or "coupled to" another element, it can be directly "on," "connected to," or "coupled to" the other element or other elements intervening therebetween may be present. In contrast, when an element is referred to as being "directly on, " "directly connected to," or "directly coupled to" another element, there may be no other elements or layers intervening therebetween. Like numerals refer to like elements throughout. As used herein, the term "and/or" includes any and all combinations of one or more of the associated listed items.

It will be apparent that though the terms first, second, third, etc. may be used herein to describe various members, components, regions, layers and/or sections, these members, components, regions, layers and/or sections should not be limited by these terms. These terms are only used to distinguish one member, component, region, layer or section from another region, layer or section. Thus, a first member, component, region, layer or section discussed below could be termed a second member, component, region, layer or section without departing from the teachings of the exemplary embodiments.

Spatially relative terms, such as "above," "upper," "below," and "lower" and the like, may be used herein for ease of description to describe one element's relationship relative to another element(s) as shown in the figures. It will be understood that the spatially relative terms are intended to encompass different orientations of the device in use or operation in addition to the orientation depicted in the figures . For example, if the device in the figures is turned over, elements described as "above," or "upper" relative to other elements would then be oriented "below," or "lower" relative to the other elements or features. Thus, the term "above" can encompass both the above and below orientations depending on a particular direction of the figures. The device may be otherwise oriented (rotated 90 degrees or at other orientations) and the spatially relative descriptors used herein may be interpreted accordingly.

The terminology used herein describes particular embodiments only, and the present disclosure is not limited thereby. As used herein, the singular forms "a," "an," and "the" are intended to include the plural forms as well, unless the context clearly indicates otherwise. It will be further understood that the terms "comprises," and/or "comprising" when used in this specification, specify the presence of stated features, integers, steps, operations, members, elements, and/or groups thereof, but do not preclude the presence or addition of one or more other features, integers, steps, operations, members, elements, and/or groups thereof.

Hereinafter, embodiments of the present disclosure will be described with reference to schematic views illustrating embodiments of the present disclosure. In the drawings, for example, due to manufacturing techniques and/or tolerances, modifications of the shape shown may be estimated. Thus, embodiments of the present disclosure should not be construed as being limited to the particular shapes of regions shown herein, for example, to include a change in shape results in manufacturing. The following embodiments may also be constituted by one or a combination thereof.

The contents of the present disclosure described below may have a variety of configurations and only a required configuration is proposed herein, but the present disclosure is not limited thereto.

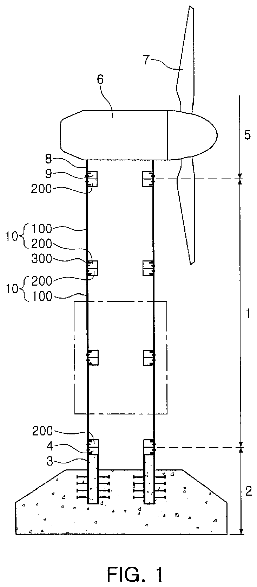

Hereinafter, with reference to FIG. 1, a tower structure 1 according to an embodiment will be described in detail.

Referring to FIG. 1, the tower structure 1 according to an embodiment may include tower modules 10 and a connecting channel portion 300.

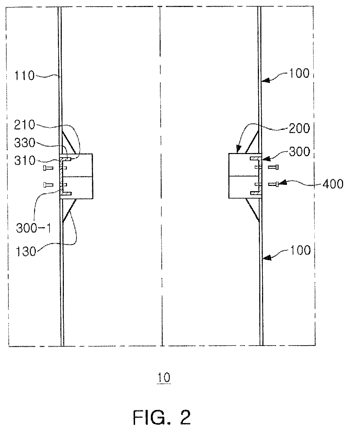

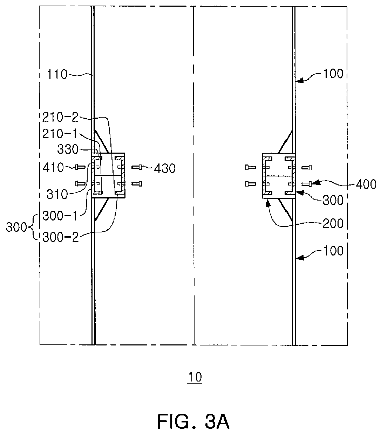

Referring to FIGS. 2 and 3A, a tower structure 1 includes a plurality of tower modules 10, and a connecting channel portion 300 connecting the tower modules 10 to each other such that the tower modules 10 are be stacked. Each of the tower modules 10 may include a module body portion 100 being hollow, and including a metal, and a flange portion 200 disposed on an end of the module body portion 100 in a height direction of the module body portion 100, and having an installation groove 210 recessed in a circumferential direction thereof. The connecting channel portion 300 connects the tower modules 10 to each other by being inserted into the installation groove 210 such that the tower modules 10 are stacked.

As illustrated in FIGS. 2 and 3A, the module body portion 100 is a structure that extends in a height direction thereof and is hollow.

The module body portion 100 may include a metal. In an embodiment, the module body portion 100 and the flange portion 200 include steels, respectively, and the flange portion 200 is welded to the end of the module body portion 100.

For convenience of construction, for example, the tower module 10 having the flange portion 200 previously welded to both ends of the module body portion 100 is transported to a field to build a tower structure.

As illustrated in FIGS. 1 through 3A, the flange portion 200 is a member that connects the tower modules 10 to each other by being disposed on both ends of the module body portion 100 in the height direction of the module body portion 100 such that the tower modules 10 are stacked.

Here, the flange portion 200 includes a metal, and is welded to a metallic portion of the module body portion 100.

The flange portion 200 is installed on both ends of the module body portion 100 in the height direction of the module body portion 100, and is installed in an overall circumferential direction of the tower module 10.

The installation groove 210 is formed in a surface of the flange portion 200, and the tower structure 1 is installed by sequentially connecting the tower modules 10 to each other by inserting the connecting channel portion 300 into the installation groove 210 of the flange portion 200 such that the tower modules 10 are stacked.

Here, the installation groove 210 is formed in the overall circumferential direction of the tower modules 10.

As illustrated in FIGS. 1 through 3A, the connecting channel portion 300 is a member that connects the tower modules 10 to each other by being inserted into the installation groove 210 recessed from the surface of the flange portion 200 such that the tower modules 10 are stacked.

The connecting channel portion 300 connects and fixes the tower modules 10 to each other in the height direction by being inserted into the installation groove 210 recessed from the surface of the flange portion 200 in the circumferential direction such that the tower modules 10 are stacked.

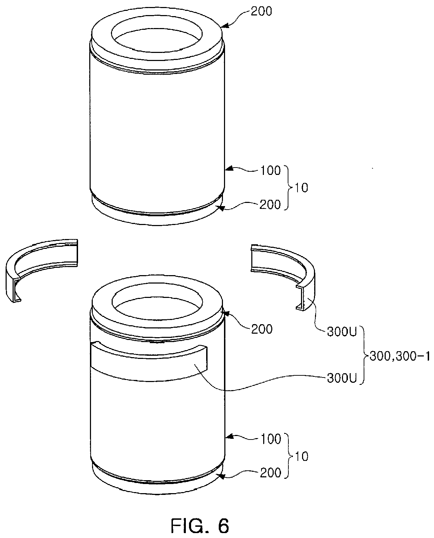

As illustrated in FIG. 6, a connecting channel portion 300 connects, to each other, tower modules 10, having a cylindrical shape and formed in an overall circumferential direction of the tower modules 10, in a vertical direction.

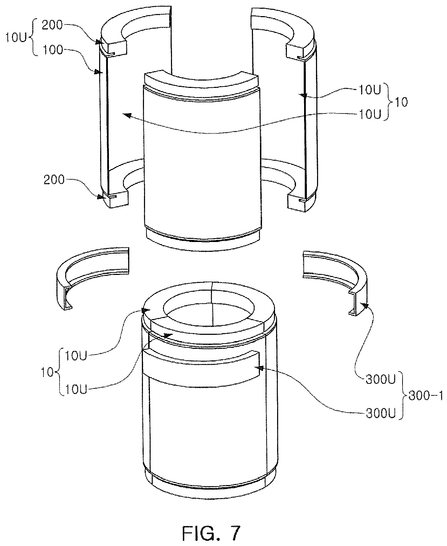

As illustrated in FIG. 7, a connecting channel portion 300 connects tower modules 10 to each other in a vertical direction, and each of the tower modules 10 has at least two segment modules 10U having a cross section segmented in a circumferential direction of the tower modules 10 and connected to each other.

As illustrated in FIGS. 2 and 3A, the connecting channel portion 300 has a curvature corresponding to that of the surface of the flange portion 200, and while the connecting channel portion 300 is inserted into the installation groove 210 of the flange portion 200, the surface of the flange portion 200 and a surface of the connecting channel portion 300 have the same height.

Here, the connecting channel portion 300 is installed in the overall circumferential direction of the tower modules 10.

As such, the connecting channel portion 300 may be inserted into the installation groove 210 recessed from the flange portion 200 to connect the tower modules 10 to each other such the tower modules 10 are stacked, and the tower modules 10 segmented in a length direction of the tower structure 1 may thus be connected to each other in a simple manner, increasing constructability and reducing a period of time required for construction.

As illustrated in FIGS. 2 and 3A, the tower structure 1 may further include a fastening member 400 that fastens the connecting channel portion 300 to the flange portion 200 by being fixed to the flange portion 200 through the connecting channel portion 300.

The fastening member 400 is provided as a bolt member that fastens the connecting channel portion 300 to the flange portion 200 by being fixed to an outer surface of the flange portion 200 through an outer channel member 300-1 from the outside of the tower structure 1 or by being fixed to an inner surface of the flange portion 200 through an inner channel member 300-2 of the connecting channel portion 300 from the inside of the tower structure 1.

The fastening member 400 is not limited to the bolt member, and various fastening members, such as a rivet, fastening the connecting channel portion 300 to the flange portion 200, may be used.

As illustrated in FIGS. 2 and 3A, the module body portion 100 may include an outer shell 110 and a stiffening member 130.

The module body portion 100 may include the outer shell 110 forming an outer surface of the module body portion 100, and including a metal, and the stiffening member 130 formed on a connecting portion of the outer shell 110 and the flange portion 200 to reinforce the connecting portion.

The outer shell 110 includes a cylindrical member forming the outer surface of the module body portion 100.

Here, the outer shell 110 includes a single metal plate having a cylindrical shape.

Further, although not illustrated in detail, the outer shell 110 has multilayer metal plates having a cylindrical shape, spaced apart from each other, and overlapping each other, and has reinforcing partitions formed between the overlapping metal plates in at least one of a circumferential direction or a height direction of the outer shell 110.

The stiffening member 130 is a member that is formed on the connecting portion of the outer shell 110 and the flange portion 200 to reinforce the connecting portion.

As illustrated in FIG. 2, the stiffening member 130 is illustrated using dotted line to represent the stiffening member 130 as a sub-member installed in the module body portion 100.

The outer shell 110 and the stiffening member 130 are welded to the flange portion 200.

The stiffening member 130 is welded to the connecting portion of the outer shell 110 and the flange portion 200, and a plurality of stiffening members 130 are spaced apart from each other in the connecting portion of the outer shell 110 and the flange portion 200 in the circumferential direction of the outer shell 110.

The connecting channel portion 300 may include the outer channel member 300-1 inserted into an outer installation groove 210-1 recessed from the outer surface of the flange portion 200 in the circumferential direction of the flange portion 200, and the inner channel member 300-2 inserted into an inner installation groove 210-2 recessed from the inner surface of the flange portion 200.

The outer channel member 300-1 connects outer surfaces of the tower modules 10 to each other in the height direction of the tower modules 10 by being inserted into the outer installation groove 210-1 recessed from the outer surface of the flange portion 200 in the circumferential direction of the flange portion 200, such that the tower modules 10 are stacked.

The inner channel member 300-2 connects inner surfaces of the tower modules 10 to each other in the height direction of the tower modules 10 by being inserted into the inner installation groove 210-2 recessed from the inner surface of the flange portion 200 in the circumferential direction of the flange portion 200 such that the tower modules 10 are stacked.

In an embodiment, as illustrated in FIG. 2, the connecting channel portion 300 includes the outer channel member 300-1 inserted into the outer installation groove 210-1 recessed from the outer surface of the flange portion 200 in the circumferential direction of the flange portion 200.

As such, the reason why at least the outer channel member 300-1 inserted into the outer installation groove 210-1 recessed from the outer surface of the flange portion 200 in the circumferential direction of the flange portion 200 needs to be installed is to secure performance against load on a connecting portion of the tower modules 10 connected to each other, such that the tower modules 10 are stacked.

In another embodiment, as illustrated in FIG. 3A, the outer channel member 300-1 and the inner channel member 300-2 are all installed, and thus, the outer and inner surfaces of the tower modules 10 are connected to each other, respectively, to overlap each other in the height direction of the tower modules 10 such that the tower modules 10 are stacked.

As illustrated in FIG. 6, a connecting channel portion 300 is disposed in an overall circumferential direction of tower modules 10, and has at least two segment channels 300U installed in the overall circumferential direction.

The connecting channel portion 300 may also have three segment channels 300U in the overall circumferential direction of the tower modules 10.

The connecting channel portion 300 including two segment channels 300U may be installed in the overall circumferential direction of the tower modules 10, but in terms of constructability, the connecting channel portion 300 may include, for example, at least three segment channels 300U.

As illustrated in FIGS. 2 and 3A, the connecting channel portion 300 may include a channel body 310 and insertion channels 330.

The connecting channel portion 300 has the channel body 310 across the inner or outer surfaces of the flange portions 200 connected to each other in the height direction of the tower modules 10, and each of the insertion channels 330 may be bent from an end of the channel body 310 in a direction of the flange portion 200, and inserted into the installation groove 210 of the flange portion 200.

The channel body 310 is disposed across the flange portion 200 formed on a lower end of an upper tower module 10 and the flange portion 200 formed on an upper end of a lower tower module 10, and the flange portions 200 are connected to each other.

The insertion channel 330 extends in the direction of the flange portion 200 while being bent from an upper end and a lower end of the channel body 310 in a horizontal direction thereof. Here, the connecting channel portion 300 including the channel body 310 and the insertion channel 330 is inserted into the installation groove 210.

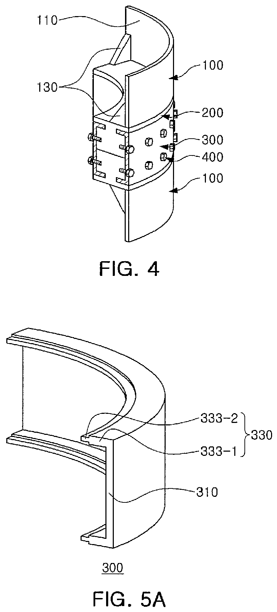

As illustrated in FIGS. 5A through 5C, the insertion channel 330 may have a tapering portion 331 or a step portion 333 having a cross section reduced toward an inside of the installation groove 210.

As illustrated in FIG. 5A, the step portion 333 may include first step portions 333-1 protruding from the upper and lower ends of the channel body 310, respectively, and second step portions 333-2 each protruding from the first step portion 333-1 and each having a cross section reduced further than that of the first step portion 333-1.

The step portion 333 is configured in step form, in which the width of the second step portion 333-2 in a height direction of the second step portion 333-2 is reduced more than that of the first step portion 333-1 in a height direction of the first step portion 333-1.

The installation groove 210 may include a first installation groove 210 recessed from the surface of the flange portion 200, and a second installation groove 210 recessed from a lower surface of the first installation groove 210, and having a cross section reduced further than that of the first installation groove 210.

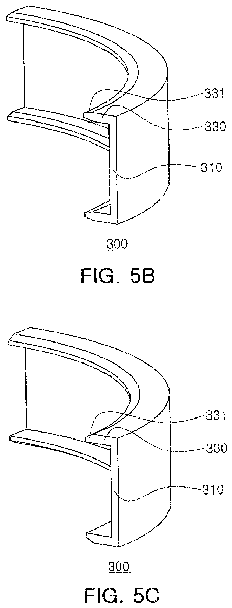

As illustrated in FIGS. 5B and 5C, the tapering portion 331 having the cross section reduced toward the inside of the installation groove 210 is formed, and the installation groove 210 may include a cross-sectional portion corresponding to the cross section of the tapering portion 331.

The insertion channel 330 has the tapering portion 331, and when the connecting channel portion 300 is fixed to the flange portion 200 by the fastening member 400, the connecting channel portion 300 is more strongly coupled to the flange portion 200 while being more tightly compressed in the installation groove 210 of the flange portion 200.

Further, the tapering portion 331 functions to guide the insertion channel 330 of the connecting channel portion 300 to be more easily inserted into the installation groove 210 of the flange portion 200 when the insertion channel 330 is inserted into the installation groove 210.

As illustrated in FIG. 5B, the tapering portion 331 has an isosceles trapezoidal shape, or as illustrated in FIG. 5C, the tapering portion 331 has a right-angled trapezoidal shape.

As illustrated in FIG. 5C, when the tapering portion 331 has a right-angled trapezoidal shape, a gap may occur in a linear section of the tapering portion 331 in the process of fixing the connecting channel portion 300 to the flange portion 200 by the fastening member 400, and thus, as illustrated in FIG. 5B, the tapering portion 331 may be, for example, isosceles trapezoidal.

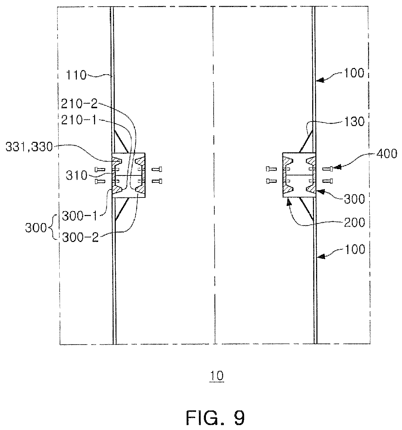

As illustrated in FIG. 9, an insertion channel 330 has a cross section reduced toward an inside of an installation groove 210, and has a tapering portion 331 extending to a channel body 310. The tapering portion 331 may include an upward tapering surface upwardly inclined from a front end of the insertion channel 330 in a direction of the channel body 310, and a downward tapering surface downwardly inclined from the front end of the insertion channel 330 in the direction of the channel body 310.

Although not illustrated, a flange portion 200 and a connecting channel portion 300 include metals, respectively, and a metal sealing layer (not illustrated) is disposed between installation grooves 210 of the flange portion 200.

The metal sealing layer (not illustrated) functions to prevent rainwater from flowing into a connecting portion of tower modules 10 connected to each other in a height direction thereof.

The metal sealing layer (not illustrated) is disposed between the insertion channel 330 and the installation groove 210, and seals a space between the insertion channel 330 and the installation groove 210 by being pressurized by the insertion channel 330.

This may apply a high degree of pressure to the insertion channel 330 protruding from the connecting channel portion 300, and having a relatively reduced cross section, and the space between the insertion channel 330 and the installation groove 210 may be more airtightly sealed while the metal sealing layer (not illustrated) is deformed in the space.

The insertion channel 330 has a cross section minutely smaller than the installation groove 210, and the metal sealing layer (not illustrated) is disposed in a region in which a difference between the cross sections of the insertion channel 330 and the installation groove 210 occurs.

As illustrated in FIG. 3A, the connecting channel portion 300 includes the outer channel member 300-1 connecting the outer surfaces of the adjacent flange portions 200 to each other, and having a U-shaped cross section with a curvature corresponding to that of the outer surface of the flange portion 202, the inner channel member 300-2 connecting the inner surfaces of the adjacent flange portions 200 to each other, and having a U-shaped cross section with a curvature corresponding to that of the inner surface of the flange portion 202.

As illustrated in FIG. 3A, the connecting channel portion 300 includes the outer channel member 300-1 connecting the outer surfaces of the adjacent flange portions 200 to each other, and the inner channel member 300-2 connecting the inner surfaces of the adjacent flange portions 200 to each other, and the fastening member 400 may include an outer bolt member 410 fastened to the outer channel member 300-1 in a direction of the outer surface of the flange portion 200, and an inner bolt member 430 fastened to the inner channel member 300-2 in a direction of the inner surface of the flange portion 200.

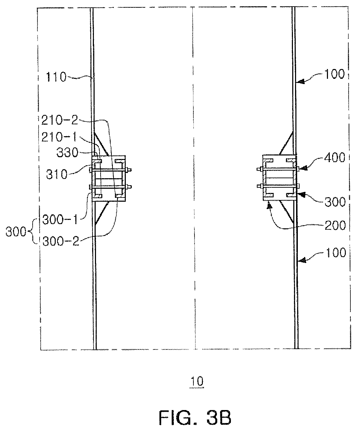

As illustrated in FIG. 3B, a connecting channel portion 300 includes an outer channel member 300-1 connecting outer surfaces of adjacent flange portions 200 to each other, and an inner channel member 300-2 connecting inner surfaces of the adjacent flange portions 200 to each other, and a fastening member 400 is provided as a through bolt member fastening the outer channel member 300-1 to the inner channel member 300-2 through the flange portion 200.

As illustrated in FIG. 7, a tower module 10 has at least two segment modules 10U having a cross section segmented in a circumferential direction of the tower module 10, and connected to each other in the circumferential direction, and a connecting channel portion 300 has a plurality of segment channels 300U segmented in the circumferential direction, and is installed across at least two segment modules 10U connected to each other in the circumferential direction.

As illustrated in FIG. 7, the tower module 10 has three segmented segment modules 10U connected to each other in the circumferential direction of the tower module 10, the connecting channel portion 300 has three segment channels 300U installed in the circumferential direction, and the respective segment channels 300U connect the three segment modules 10U to one another by being installed across the two adjacent segment modules 10U.

Although not illustrated, a tower structure 1 may include a first module connecting portion connected to the segment module 10U of the tower module 10 disposed on a lower side of the tower structure 1, and a second module connecting portion connected to the segment module 10U of the tower module 10 disposed on an upper side of the tower structure 1, and the first and second module connecting portions are disposed in different positions in a circumferential direction of the tower structure 1 on a cross section of the tower structure 1.

For example, the first and second module connecting portions are disposed in the different positions in the circumferential direction of the tower structure 1 on the cross section of the tower structure 1 without being collinearly disposed.

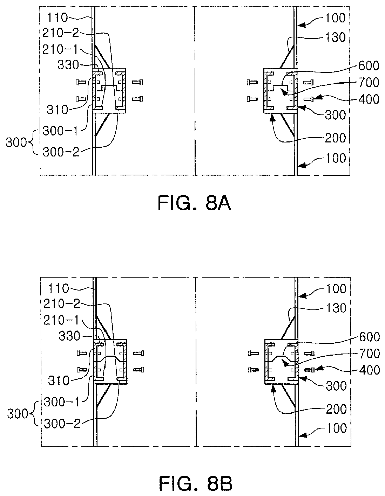

As illustrated in FIGS. 8A and 8B, a tower structure 1 may further include a protruding ring portion 600 and an insertion ring portion 700.

The protruding ring portion 600 protrudes from one of a flange portion 200 disposed on an upper end of a tower module 10 disposed on a lower side of the tower structure 1, and a flange portion 200 disposed on a lower end of the tower module 10 disposed on an upper side of the tower structure 1, and the insertion ring portion 700 is recessed from the other, and allows for insertion of the protruding ring portion 600.

For example, the tower structure 1 includes the protruding ring portion 600 protruding downwardly from a lower surface of the flange portion 200 disposed on the upper end of the tower module 10 disposed on the lower side of the tower structure 1, and the insertion ring portion 700 recessed from an upper surface of the flange portion 200 disposed on the lower end of the tower module 10 disposed on the upper side of the tower structure 1, and allowing for insertion of the protruding ring portion 600.

The protruding ring portion 600 protrudes from the lower surface of the flange portion 200 in an overall circumferential direction thereof, and the insertion ring portion 700 is recessed from the upper surface of the flange portion 200 in the overall circumferential direction thereof.

The protruding ring portion 600 and the insertion ring portion 700 function to guide the tower modules 10 to be installed in a correct position by inserting the protruding ring portion 600 into the insertion ring portion 700 such that the tower modules 10 are stacked on and connected to each other.

The protruding ring portion 600 functions as a dam by protruding from the lower surface of the flange portion 200 disposed on the upper end of the tower module 10 disposed on the lower side of the tower structure 1, thus preventing rainwater from flowing into a gap between the tower modules 10 stacked on and connected to each other.

A metal sealing layer is disposed between the protruding ring portion 600 and the insertion ring portion 700 to seal a space between the protruding ring portion 600 and the insertion ring portion 700 by being pressurized by the weight of the tower modules 10 stacked on each other.

As illustrated in FIG. 8B, the protruding ring portion 600 protrudes in the overall circumferential direction of the flange portion 200, and is provided with a tapered cross section protruding from the lower surface of the flange portion 200.

The insertion ring portion 700 is disposed in the overall circumferential direction, is recessed from the upper surface of the flange portion 200, and is provided with a tapered cross section corresponding to the protruding ring portion 600.

Referring next to FIGS. 1 through 8B, a wind turbine tower will be described in detail.

Referring to FIG. 1, a wind turbine tower according to an embodiment may include a base, the tower structure 1, and a wind power generator 5.

The wind turbine tower may include the base having a lower end thereof embedded in the ground, and having an upper end thereof with an installation platform 3 formed thereon; the tower structure 1 having the flange portion 200 fixed to an installation flange 4 of an installation platform 3 by the connecting channel portion 300; and the wind power generator 5 installed on an upper end of the tower structure 1.

As illustrated in FIG. 1, the tower structure 1 is installed on the installation platform 3 positioned on the upper end of the base, and the base supports the weight of the tower structure 1 and the wind power generator 5 installed on the upper end of the tower structure 1.

The base is provided as a concrete base 2, and has the lower end thereof embedded in the ground, and has the installation platform 3 disposed on the upper end thereof.

The installation platform 3 has the installation flange 4 disposed on an upper end of the installation platform 3, and the base is connected to the tower structure 1 by installing the connecting channel portion 300 in the flange portions 200 disposed on the installation flange 4 and on the lower end of the tower structure 1.

The wind power generator 5 is installed on the upper end of the tower structure 1. The wind power generator 5 may include a blade 7, a rotor rotated by the blade 7, and a nacelle 6 having further equipment, including a rotor, installed therein.

The nacelle 6 has a steel shell 8, including a metal, installed on a lower side thereof, and the steel shell 8 has a connecting flange 9 formed on a lower end thereof.

The tower structure 1 is connected to the wind power generator 5 by installing the connecting channel portion 300 in the flange portions 200 disposed on the connecting flange 9 and on the upper end of the tower structure 1.

Further, the tower structure 1 according to various embodiments described above may be applied to the wind turbine tower according to an embodiment.

Thus, the configuration of the module body portion 100, the flange portion 200, and the connecting channel portion 300 of the tower structure 1 used in the wind turbine tower is the same as that of the tower structure 1 as described above, and a detailed description thereof will be omitted in order to avoid repeated descriptions.

As set forth above, according to an embodiment, a tower structure may be configured for a connecting channel portion to connect a plurality of tower modules to each other by being inserted into an installation groove recessed from a flange portion such that the tower modules may be stacked so as to connect the tower modules, segmented in a length direction of the tower structure, to each other in a simple manner, thus increasing constructability and reducing a period of time require for construction.

While exemplary embodiments have been shown and described above, it will be apparent to those skilled in the art that modifications and variations could be made without departing from the scope of the present invention as defined by the appended claims.

## Claims

1. A tower structure comprising:
a plurality of tower modules; and
a connecting channel portion connecting the plurality of tower modules to each other such that the plurality of tower modules are stacked,
wherein each of the plurality of tower modules comprises:
a module body portion being hollow and including a metal; and
a flange portion disposed on an end of the module body portion in a height direction of the module body portion, and having an installation groove recessed in a circumferential direction of the flange portion,
wherein the connecting channel portion connects the plurality of tower modules to each other by being inserted into the installation groove such that the plurality of tower modules are stacked.

2. The tower structure of claim 1, further comprising a fastening member fastening the connecting channel portion to the flange portion by being fixed to the flange portion through the connecting channel portion.

3. The tower structure of claim 1, wherein the module body portion comprises:
an outer shell forming an outer surface of the module body portion, and including a metal; and
a stiffening member disposed on a connecting portion of the outer shell and the flange portion to reinforce the connecting portion.

4. The tower structure of claim 1, wherein the connecting channel portion comprises at least an outer channel member of the outer channel member and an inner channel member,
wherein the outer channel member is inserted into an outer installation groove recessed from an outer surface of the flange portion, and the inner channel member is inserted into an inner installation groove recessed from an inner surface of the flange portion.

5. The tower structure of claim 1, wherein the connecting channel portion is disposed in an overall circumferential direction of each of the plurality of tower modules, and has at least two segment channels installed in the circumferential direction.

6. The tower structure of claim 1, wherein the connecting channel portion further comprises:
a channel body formed in a height direction of the flange portion across an inner surface or an outer surface of the flange portion connected to the connecting channel portion; and
an insertion channel bent from an end of the channel body in a direction of the flange portion.

7. The tower structure of claim 6, wherein the insertion channel has a tapering portion or a step portion having a cross section decreasing toward an inside of the installation groove.

8. The tower structure of claim 6, wherein the insertion channel has a tapering portion having a cross section decreasing toward an inside of the installation groove, and extending to the channel body,
wherein the tapering portion comprises:
an upward tapering surface upwardly inclined from a front end of the insertion channel in a direction of the channel body; and
a downward tapering surface downwardly inclined from the front end of the insertion channel in the direction of the channel body.

9. The tower structure of claim 1, wherein the flange portion and the connecting channel portion include metals, respectively, and the connecting channel portion, and the installation groove of the flange portion have a metal sealing layer disposed therebetween.

10. The tower structure of claim 1, wherein the connecting channel portion further comprises:
an outer channel member connecting outer surfaces of the adjacent flange portions to each other, and having a U-shaped cross section with a curvature corresponding to curvatures of the outer surfaces of the adjacent flange portions; and
an inner channel member connecting inner surfaces of the adjacent flange portions to each other, having a U-shaped cross section with a curvature corresponding to curvatures of the inner surfaces of the adjacent flange portions.

11. The tower structure of claim 2, wherein the connecting channel portion comprises:
an outer channel member connecting outer surfaces of the adjacent flange portions to each other; and
an inner channel member connecting inner surfaces of the adjacent flange portions to each other, and
wherein the fastening member comprises:
an outer bolt member fastened to the outer channel member in a direction of the outer surface of the flange portion; and
an inner bolt member fastened to the inner channel member in a direction of the inner surface of the flange portion.

12. The tower structure of claim 2, wherein the connecting channel portion comprises:
an outer channel member connecting outer surfaces of the adjacent flange portions to each other; and
an inner channel member connecting inner surfaces of the adjacent flange portions to each other, and
wherein the fastening member is provided as a through bolt member fastening the outer channel member to the inner channel member through the flange portion.

13. The tower structure of claim 1, wherein the tower module has at least two segment modules having cross sections segmented in a circumferential direction of the tower module, the at least two segment modules connected to each other in the circumferential direction, and the connecting channel portion has a plurality of segment channels segmented in the circumferential direction, and is installed across the at least two segment modules connected to each other in the circumferential direction.

14. The tower structure of claim 1, wherein the tower module further comprises:
a protruding ring portion protruding from one of the flange portion formed on an upper end of the tower module disposed on a lower side of the tower structure, and the flange portion formed on a lower end of the tower module disposed on an upper side of the tower structure; and
an insertion ring portion recessed from the other, and allowing for insertion of the protruding ring portion.

15. A wind turbine tower comprising:
a base having a lower end thereof embedded in the ground, and having an upper end thereof with an installation platform formed thereon;
a tower structure having a flange portion fixed to an installation flange of the installation platform by a connecting channel portion, the tower structure described in any one of claims 1 to 14; and
a wind power generator installed on an upper end of the tower structure.
